# EUROPEAN PATENT APPLICATION

(11) **EP 4 629 067 A1**
(43) Date of publication of application: **08.10.2025**
(21) Application number: 23905299.6
(22) Date of filing: 29.08.2023
(51) Int. Cl.: G06F 9/445, G06F 8/30, G06F 8/41

(54) **ONBOARD SOFTWARE EXECUTION METHOD AND APPARATUS, VEHICLE, AND STORAGE MEDIUM**

(30) Priority: 20.12.2022 CN 202211643229
(71) Applicant: Guangzhou Automobile Group Co., Ltd., Guangzhou, Guangdong 510030 (CN)
(72) Inventor: LIAO, Lei, Guangzhou, Guangdong 511434 (CN); ZHANG, Junyi, Guangzhou, Guangdong 511434 (CN); CHEN, Xiaole, Guangzhou, Guangdong 511434 (CN); SONG, Yiwei, Guangzhou, Guangdong 511434 (CN); YANG, Yi, Guangzhou, Guangdong 511434 (CN); ZOU, Haiyang, Guangzhou, Guangdong 511434 (CN)
(74) Representative: Zaboliene, Reda
(86) International application number: PCT/CN2023/115497
(87) International publication number: WO 2024/131120

(57) **Abstract**

A vehicle software execution method and device, a vehicle, and a storage medium are provided. The vehicle software execution method includes obtaining a script file corresponding to vehicle software, the script file includes a number of nodes of different types; splitting the script file into a logic script file and an interaction script file according to a node type of each node in the script file; and transmitting the logic script file to a logic engine and transmitting the interaction script file to an interaction engine respectively, enabling the logic engine to execute the logic script file, and enabling the interaction engine to executes the interaction script file, during a script file execution process, the interaction engine and the logic engine call each other according to content of the script file, which can improve the system operation efficiency, system robustness, and business coverage of the script file, support a large number of complex software businesses, avoid the problem of interactive conflicts that are easy to occur when the interaction script files of different vehicle software are executed, and have good flexibility and adaptability for vehicle software development and change iteration.

## Description

### CROSS-REFERENCE TO RELATED APPLICATIONS

The present disclosure claims priority to Chinese Patent Application No. 202211643229.8, entitled "a vehicle software execution method and device, a vehicle, and a storage medium" filed on December 20, 2022, the contents of which are incorporated by reference herein.

### TECHNICAL FIELD

The present disclosure relates to a technical field of vehicle software, and particularly to a vehicle software execution method and device, a vehicle, and a storage medium.

### BACKGROUND

In current environment where user requirements are changing rapidly, an update and iteration speed of traditional hardware can hardly meet the user requirements, software-defined vehicles have become a new direction for development of smart vehicles, and market and enterprises have higher requirements for the update and iteration speed of vehicle software. In this context, a technical solution has been developed to drive software execution with software script files plus engine parsers. A product script file is a code structure that describes functions of the vehicle software. The product script file applies grammatical rules of JavaScript Object Notation (JSON), to abstract the implementation details of the vehicle software and describe the functional definition and logical implementation of the vehicle software in a highly structured manner.

At present, in the field of vehicle software technology, hard coding is usually used to implement vehicle software development. In detail, based on the existing platform, vehicle software developers use programming languages (e.g., C/C++ languages) to specifically encode the functional business logic of specific vehicle software, generate an execution program after encoding, integrate the execution program into a specific vehicle-mounted system for execution, or provide the execution program in a form of a third-party application (APP). The hard coding for vehicle software development has a long development cycle. In addition, when the vehicle software is required to be updated and iterated, the hard coding method can only be used to re-encode and package the vehicle software and use Over the Air (OTA) technology for upgrading, which has poor adaptability to the update and the iteration of vehicle software.

### SUMMARY

The embodiment of the present disclosure provides a vehicle software execution method and device, a vehicle, and a storage medium to solve the above-mentioned problems.

In a first aspect, the embodiment of the present disclosure provides a vehicle software execution method, the vehicle software execution method includes: obtaining a script file corresponding to vehicle software, the script file including a plurality of nodes of different types; splitting the script file into a logic script file and an interaction script file according to a node type of each node in the script file; and transmitting the logic script file to a logic engine and transmitting the interaction script file to an interaction engine respectively, enabling the logic engine to execute the logic script file, and enabling the interaction engine to executes the interaction script file, during a script file execution process, the interaction engine and the logic engine call each other according to content of the script file.

In a second aspect, the embodiment of the present disclosure provides a vehicle software execution method, the vehicle software execution method includes: receiving a logic script file transmitted by a cloud device, where the logic script file includes a software identification; executing the logic script file in response to a trigger operation corresponding to the software identification; and when executed to trigger an interaction node, transmitting interaction instruction information to an interaction engine, enabling the interaction engine to execute the interaction node corresponding to the interaction instruction information and generate an interaction event.

In a third aspect, the embodiment of the present disclosure provides a vehicle software execution method, the vehicle software execution method includes: receiving an interaction script file transmitted by a cloud device; when receiving interaction instruction information transmitted by a logic engine, executing the interaction node corresponding to the interaction instruction information, and generating an interaction event; and transmitting the interaction event to the logic engine, to enable the logic engine to execute the function node corresponding to the interaction event.

In a fourth aspect, the embodiment of the present disclosure provides a vehicle software execution device, the vehicle software execution device includes: a script file obtaining module, used to obtain a script file corresponding to vehicle software, the script file includes a number of nodes of different types; a script file splitting module, used to split the script file into a logic script file and an interaction script file according to a node type of each node in the script file; and a script file transmitting module, used to transmit the logic script file to the logic engine and the interaction script file to the interaction engine respectively, enable the logic engine to execute the logic script file, and enable the interaction engine to execute the interaction script file, during a script file execution process, the interaction engine and the logic engine call each other according to content of the script file.

In a sixth aspect, the embodiment of the present disclosure provides a vehicle software execution device, the vehicle software execution device includes: a script file receiving module, used to receive a logic script file transmitted by a cloud device, where the logic script file includes a software identification; a script file execution module, used to execute the logic script file in response to a trigger operation corresponding to the software identification; and an instruction information transmitting module, used to transmit interaction instruction information to the interaction engine when executed to the trigger interaction node, enable the interaction engine to execute the interaction node corresponding to the interaction instruction information and generate an interaction event.

In a seventh aspect, the embodiment of the present disclosure provides a vehicle software execution device, the vehicle software execution device includes: a script file receiving module, used to receive an interaction script file transmitted by a cloud device; a script file execution module, used to execute the interaction node corresponding to the interaction instruction information and generate an interaction event when receiving the interaction instruction information transmitted by the logic engine; and an interaction event transmitting module, used to transmit the interaction event to the logic engine to enable the logic engine to execute the functional node corresponding to the interaction event.

In an eighth aspect, the embodiment of the present disclosure provides a vehicle, the vehicle includes: a memory; one or more processors; and one or more applications stored in the memory, and the one or more applications are used to enable the one or more processors execute the vehicle software execution method when called by the one or more processors.

In a ninth aspect, the embodiment of the present disclosure provides a computer-readable storage medium, characterized in that, the computer-readable storage medium includes: a plurality of program codes used to enable a processor to execute the vehicle software execution method when called by the processor.

The embodiment of the present disclosure provides a vehicle software execution method, device, vehicle, and storage medium. The vehicle software execution method can split the obtained script file into a logic script file and an interaction script file according to the node type, and transmit the logic script file to the logic engine and the interaction script file to the interaction engine respectively, so that the logic engine executes the logic script file and the interaction engine executes the interaction script file. In the process of executing the script file, the interaction engine and the logic engine can call each other according to the content of the script file, so as to achieve the following technical effects:
1) A dual-engine mode with collaborative logic engine and interaction engine is designed, to improve system operation efficiency and system robustness, which solves the problem that the script file of the vehicle software are executed in a main engine, and the main engine requires to handle different types of tasks such as control logic and interactive content rendering at the same time, resulting in poor system operation efficiency and system robustness;
2) By adding the interaction script file that describes the interactive content to the script file corresponding to the vehicle software, the business coverage of the script file can be improved, and a large number of complex software businesses can be supported, solving the problem that the script file of the vehicle software does not include the description of the interactive content part, resulting in a single software business type and inability to meet complex software business requirements;
3) By designing a special interaction engine to execute the interaction script file of the vehicle software, the interaction engine can uniformly manage and execute the interaction script file of the vehicle software, thereby avoiding the problem of interaction conflicts that are prone to occur when the interaction script files of different vehicle software are executed;
4) The vehicle software is implemented based on the script file of the vehicle software, the developers only need to write the corresponding description content in the script file corresponding to the vehicle software through the cloud, to realize the vehicle software development, the development cycle of the vehicle software is short and the development flexibility is strong; in addition, when the vehicle software is updated and iterated, only the description content of the script file corresponding to the vehicle software is required to be updated, and there is no need to update the engine, which has strong adaptability to the update and iteration of the vehicle software.

### BRIEF DESCRIPTION OF THE DRAWINGS

In order to more clearly state the technical solution in the embodiment of the present disclosure, the following is a brief introduction of the drawings required to be used in the description of the embodiment, it is obvious that the drawings described below are only some embodiments of the present disclosure, for those skilled in the art, other drawings can also be obtained from these drawings without creative labor.
FIG. 1 is a structural schematic view of an embodiment of a vehicle software execution system according to the present disclosure;
FIG. 2 is a flowchart of an embodiment of a vehicle software execution method according to the present disclosure;
FIG. 3 is a schematic view of an embodiment of an interaction interface and corresponding description according to the present disclosure;
FIG. 4 is a flowchart of an embodiment of a vehicle software execution method according to the present disclosure;
FIG. 5 is a flowchart of an embodiment of a vehicle software execution method according to the present disclosure;
FIG. 6 is a flowchart of an embodiment of a vehicle software execution method according to the present disclosure;
FIG. 7 is a flowchart of an embodiment of a vehicle software execution method according to the present disclosure;
FIG. 8 is a schematic view of an embodiment of a sequential flow of the vehicle software execution method according to the present disclosure;
FIG. 9 is a structural schematic view of an embodiment of a vehicle software execution device according to the present disclosure;
FIG. 10 is a structural schematic view of an embodiment of a vehicle software execution device according to the present disclosure;
FIG. 11 is a structural schematic view of an embodiment of a vehicle software execution device according to the present disclosure;
FIG. 12 is a structural schematic view of an embodiment of a vehicle according to the present disclosure;
FIG. 13 is a structural schematic view of an embodiment of a computer-readable storage medium according to the present disclosure.

### DETAILED DESCRIPTION

In order to enable those skilled in the art to better understand the solution of the present disclosure, the technical solution in the embodiments of the present disclosure will be clearly and completely described below in conjunction with the drawings in the embodiments of the present disclosure.

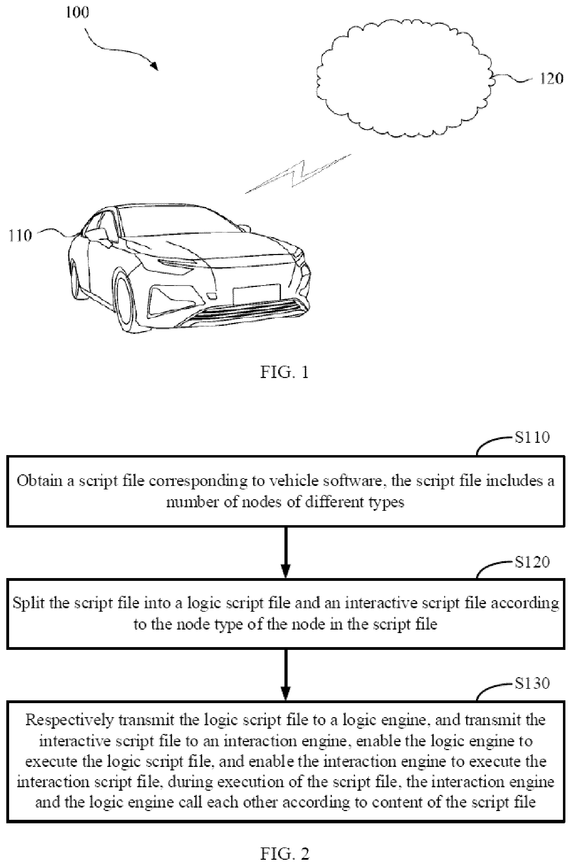

FIG. 1 illustrates a structural schematic view of an embodiment of a vehicle software execution system. The vehicle software execution system 100 includes a vehicle 110 and a cloud device 120. The vehicle 110 and the cloud device 120 can communicate with each other based on a vehicle-cloud communication link, to implement distribution of the vehicle software.

The vehicle 110 may be a gasoline vehicle or an electric vehicle, etc., and the electric vehicle may be a pure electric vehicle, a hybrid vehicle, or a fuel cell vehicle, etc. The vehicle 110 may include a logic engine and an interaction engine. The logic engine is main operation environment of a script file of the vehicle software, and a vehicle-end parser of the script file. The logic engine can be deployed in a domain controller of vehicle-mounted environment, to implement life cycle management of the script file, the operation of the script file, and the call of the function of the vehicle service oriented architecture (SOA). The interaction engine is the operation environment of the interactive content part in the script file of the vehicle software, that is, the parser of the interactive content part, for example, various graphical interfaces for interacting with users. The interaction engine can be deployed in the domain controller of the vehicle-mounted environment, to implement the front-end rendering of the interactive content, the life cycle management of the interactive content, the manipulation of the interactive content, etc. During the execution of the script file, the logic engine and the interaction engine work together and can call each other.

The cloud device 120 is deployed in the cloud, and is used to design and generate script files for the vehicle software. The cloud device 120 may be a cloud server, and the cloud device 120 may include a script file editing tool, and the script file editing tool may include but is not limited to a NOTEPAD++ editor, a VIM editor, a GNU EMACS editor, a SUBLIME TEXT editor, an ATOM editor, a PSPAD editor, a GEANY editor, a Visual Studio Code editor, a JEDIT editor, and a NETBEANS editor.

FIG. 2 illustrates a flowchart of an embodiment of a vehicle software execution method. The vehicle software execution method can be applied to the cloud device 120 or a vehicle software execution device 200. The vehicle software execution method can include the following steps S110 to S130.

Step S110, obtaining a script file corresponding to the vehicle software, where the script file includes a number of nodes of different types.

The script file of the vehicle software can usually be abstracted into a ternary structure including a scene object, an interaction object, and a service set object. For example, the script file corresponding to a smart scene service product "Heavy Rain Mode" can be disassembled into a scene object for "determining whether it is raining heavily during driving", an interaction object for "a pop-up window for asking the user whether to execute the product", and a service set object including a number of service actions such as "turning on wipers" and/or "turning on warning lights".

In order to meet complex business logic, the embodiment of the present disclosure derives other nodes based on the ternary structure. That is, the script file in the embodiment of the present disclosure may include a number of nodes of the following three types:
Node type 1: functional node, used to describe content related to vehicle control, scene judgment, and vehicle-to-cloud services. The functional node is marked with a corresponding functional node tag, such as a "sceneNode" tag, a "serviceNode" tag, and a "tspServiceNode" tag.
Node type 2: interaction node, used to describe content related to human-computer interaction. The interaction node can be marked with corresponding an interaction node tag, such as an "interactionNode" tag. The interaction node can be used to describe an interaction structure, an interaction style, an interaction state, an interaction behavior, and an interaction event.

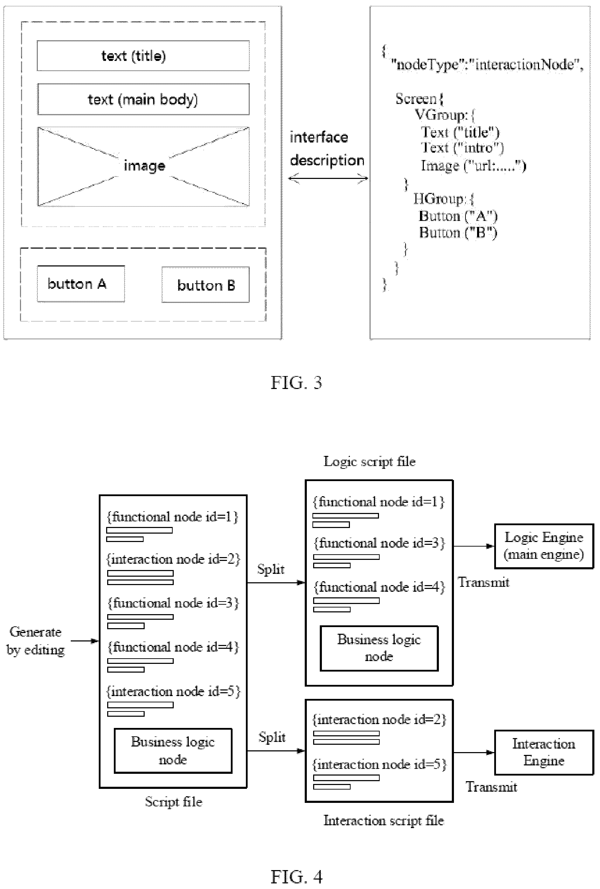

The interactive structure refers to the specific elements and a composition method of the specific elements in the interaction node. Each element has a unique tag name. For example, the text element corresponds to a tag name "text" and the button element corresponds to a tag name "button". The elements can be nested arbitrarily to form specific modules and finally form an interaction interface. As an example, as shown in FIG. 3, the rectangular box on the left represents the interaction interface, and the rectangular box on the right represents the script file part corresponding to the interaction interface. The interaction interface includes a first group of structures and a second group of structures. The first group of structures includes three elements: text title, text body, and image, and the second group of structures includes two elements: button A and button B.

The interaction style refers to the style attributes of an element, for example, a color attribute, a font-size attribute, and a padding attribute.

The interaction state refers to the state attribute or animation attribute of an element.

The interactive behavior refers to the interactive behavior attribute of an element, such as the tap attribute, the longpress attribute, and the drag attribute.

The interaction event refers to a specific interaction event generated by the interaction behavior of the element. For example, the interaction event can be represented by the attribute "event".

Node type 3: business logic node, used to describe the connection relationship of all nodes. The business logic node can be marked with a corresponding business logic node tag, for example, a "connectionNode" tag. The business logic node describes the connection relationship between two nodes through a connection object, and ultimately constitute the operation logic of the entire vehicle software.

It should be noted that the function node, interaction node, and business logic node in the embodiments of the present disclosure all include certain text content, executing the function node or the interaction node referred to in the embodiments of the present disclosure later refer to executing the text content included in the function node or interaction node.

Developers can design and modify the script file of vehicle software through the cloud device at any stage of the vehicle life cycle. The cloud device can obtain the script file of vehicle software designed or modified by the developer through the cloud device, the script file may include multiple nodes of the above three types and the software identification (ID) of the vehicle software. The software identification of the vehicle software is used to identify the vehicle software.

Step S120, splitting the script file into a logic script file and an interaction script file according to the node type of the node in the script file.

In some embodiments, the node tag of the node in the script file is obtained; and the node type of the node is determined according to the node tag of the node. In detail, the type of the node corresponding to the function node tag may be determined as the function node type, the type of the node corresponding to the interaction node tag may be determined as the interaction node type, and the type of the node corresponding to the business logic node tag may be determined as the business logic node type.

In some embodiments, if the node type of the node belongs to an interaction node type, the node is determined to be an interaction node, and the interaction node is split into the interaction script file.

In some embodiments, if the node type of the node belongs to a functional node type, the node is determined to be a functional node, and the functional node is split into the logic script file.

In some embodiments, if the node type of the node belongs to the business logic node type, the node is determined to be a business logic node, and the business logic node is split into the logic script file.

It should be noted that the logic script file obtained after splitting the script file of the vehicle software may include one or more functional nodes and one or more business logic nodes, and the interaction script file may include one or more interaction nodes.

It should also be noted that the logic script file and the interaction script file in the embodiment of the present disclosure have the same software identification, which is used to indicate that the logic script file and the interaction script file with the same software identification belong to the content of the script file of the same vehicle software, so as to facilitate the subsequent calling of the logic script file and the interaction script file of the same vehicle software, to avoid script file calling errors.

In some embodiments, the script file of the vehicle software can be split in sequence according to an order in which the nodes in the script file of the vehicle software are written, for example, if the node writing order is nodes 1 to 5, then the script file can be split in the order of nodes 1 to 5.

In some embodiments, in order to improve the efficiency of script file splitting, it is considered that the number of interaction nodes is usually less than the total number of functional nodes and business logic nodes, and the content included in the interaction nodes is less than the content included in the functional nodes and business logic nodes, the script file of the vehicle software can be split in sequence according to the node type, for example, the interaction nodes are first split into the interaction script file, and then the remaining nodes are split into the logic script file.

Step S130, respectively transmitting the logic script file to the logic engine, and transmitting the interaction script file to the interaction engine, enabling the logic engine to execute the logic script file, and enabling the interaction engine to execute the interaction script file, during the execution of the script file, the interaction engine and the logic engine call each other according to the content of the script file.

The interaction engine and the logic engine can call each other, which means that when the logic engine executes to the point where the logic engine requires to trigger an interaction node, the logic engine requires to transmit specific instruction information to the interaction engine, to call the interaction engine. When the interaction engine is called by the logic engine, the interaction engine executes the interaction node and generates the corresponding interaction event, and the interaction engine feeds back the interaction event to call the logic engine.

In some embodiments, when the script file of the vehicle software completes being split, the logic script file can be transmitted to the logic engine, and the interaction script file can be transmitted to the interaction engine respectively.

In some embodiments, after the interaction script file is split out from the script file of the vehicle software, the interaction script file can be transmitted to the interaction engine first, and then the logical script file can be transmitted to the logical engine after the logical script file is split out from the script file of the vehicle software.

The vehicle software execution method provided in the embodiment of the present disclosure can achieve the following technical effects:
1) A dual-engine mode with collaborative logic engine and interaction engine is designed, to improve system operation efficiency and system robustness, which solves the problem that the script file of the vehicle software are executed in a main engine, and the main engine requires to handle different types of tasks such as control logic and interactive content rendering at the same time, resulting in poor system operation efficiency and system robustness;
2) By adding the interaction script file that describes the interactive content to the script file corresponding to the vehicle software, the business coverage of the script file can be improved, and a large number of complex software businesses can be supported, solving the problem that the script file of the vehicle software does not include the description of the interactive content part, resulting in a single software business type and inability to meet complex software business requirements;
3) By designing a special interaction engine to execute the interaction script file of the vehicle software, the interaction engine can uniformly manage and execute the interaction script file of the vehicle software, thereby avoiding the problem of interaction conflicts that are prone to occur when the interaction script files of different vehicle software are executed;
4) The vehicle software is implemented based on the script file of the vehicle software, the developers only need to write the corresponding description content in the script file corresponding to the vehicle software through the cloud, to realize the vehicle software development, the development cycle of the vehicle software is short and the development flexibility is strong; in addition, when the vehicle software is updated and iterated, only the description content of the script file corresponding to the vehicle software is required to be updated, and there is no need to update the engine, which has strong adaptability to the update and iteration of the vehicle software.

For ease of understanding, an example shown in FIG. 4 is provided to illustrate the vehicle software execution method shown in FIG. 2. The vehicle software developer can edit the script file of the vehicle software on the cloud device, and the cloud device can generate the corresponding script file of the vehicle software, as shown in FIG. 4, the script file includes functional nodes 1, 3, 4, interaction nodes 2 and 5, and a business logic node. According to the node type, the script file can be split into a logic script file and an interaction script file, where the logic script file includes functional nodes 1, 3, 4 and the business logic node, and the interaction script file includes interaction nodes 2 and 5. After the script file is split, the cloud device can transmit the logic script file to the logic engine, and transmit the interaction script file to the interaction engine, so that the logic engine and the interaction engine can work together to implement the vehicle software.

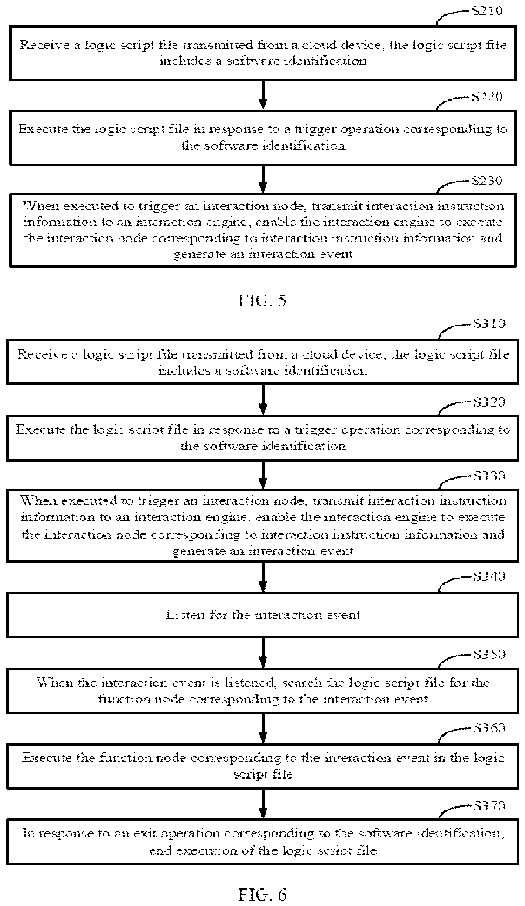

FIG. 5 illustrates a flowchart of a vehicle software execution method. The vehicle software execution method can be applied to the logic engine in the above-mentioned vehicle 110, or the vehicle software execution device 300, or the logic engine in the vehicle 500. The vehicle software execution method can include the following steps S210 to S230.

Step S210, receiving a logic script file transmitted from the cloud device, where the logic script file includes a software identification.

As mentioned above, after the cloud device separates the logic script file from the script file of the vehicle software, the cloud device can transmit the logic script file to the vehicle end, in detail, to the logic engine of the vehicle end. The logic engine can receive the logic script file transmitted by the cloud device.

Step S220, executing the logic script file in response to a trigger operation corresponding to the software identification.

A user or other electronic control unit can perform the trigger operation upon the vehicle software. For example, the user clicks an application (APP) icon of the vehicle software, or an electronic control unit sets a start flag bit of the vehicle software to a first specific character (e.g., 1), which can be considered as the trigger operation upon the vehicle software.

In some embodiments, the trigger operation performed upon the vehicle software may trigger transmission of the software identification of the vehicle software corresponding to the trigger operation to the logic engine. In response to the trigger operation corresponding to the software identification, the logic engine may search for the logic script file corresponding to the software identification, and execute the searched logic script file. In detail, each function node may be executed in sequence according to the order of the function nodes in the logic script file.

In some embodiments, the trigger operation performed on the vehicle software may trigger the transmission of the software identification and the function node identification of the vehicle software corresponding to the trigger operation to the logic engine. The function node identification is used to identify each function node. In response to the trigger operation, the logic engine may search for the logic script file corresponding to the software identification, search for the function node corresponding to the function node identification in the searched logic script file, and execute the searched function node.

Step S230, when executed to trigger the interaction node, transmitting the interaction instruction information to the interaction engine, enabling the interaction engine to execute the interaction node corresponding to the interaction instruction information, and generating an interaction event.

In the process of executing the function nodes in the logic script file, when there is a human-computer interaction requirement, that is, when there is requirement for the user to input interaction information, it is considered that the execution process reaches triggering the interaction node. At this time, the triggered interaction node can be determined according to the actual interaction requirement. For example, the actual interaction requirement is to ask the user whether to allow the execution of function A, then the triggered interaction node is an interaction node for realizing display of buttons for agreeing and disagreeing on the interaction interface. If the user clicks the agree button, it is considered that the user allows the execution of function A, and then the logic engine can execute the function node A corresponding to function A. If the user clicks the disagree button, it is considered that the user does not allow the execution of function A, and then the logic engine does not execute the function node A corresponding to function A, but executes other function nodes.

In some embodiments, when the execution process reaches triggering the interaction node, the logic engine can transmit the interaction instruction information to the interaction engine, enable the interaction engine to execute the interaction node corresponding to the interaction instruction information, and generate the interaction event. In detail, the interaction instruction information may include the software identification, the interaction node identification, and interactive content parameters (i.e., information that is required to be displayed on the interaction interface, such as the agree button and the disagree button in the above example). When the interaction engine receives the interaction instruction information, the interaction engine can search for the interaction script file corresponding to the software identification, search for the interaction node corresponding to the interaction node identification in the interaction script file, and execute the interaction node according to the interactive content parameters to generate the interaction event. For example, the interaction event can be "the user clicks the agree button" in the above example, or "the user clicks the disagree button" in the above example.

After the logic engine transmits the interaction instruction information, the logic engine can listen for the interaction event fed back by the interaction engine to continue executing the function node corresponding to the interaction event. For example, if the interaction event is "user clicks the disagree button", the function node corresponding to the interaction event is the function node A in the above example.

The vehicle software execution method provided in the embodiment of the present disclosure can execute the logic script file transmitted from the cloud in response to the trigger operation corresponding to the software identification, and when executing to the triggered interaction node, transmit the interaction instruction information to the interaction engine to call the interaction engine, which can achieve the collaborative cooperation between the logic engine and the interaction engine, improve the system operation efficiency and system robustness, and solve the problem of poor system operation efficiency and system robustness caused by the script file of the vehicle software being executed in the main engine, and the main engine requiring to simultaneously process different types of tasks such as control logic and rendering of interactive content.

FIG. 6 illustrates a flowchart of a vehicle software execution method. The vehicle software execution method can be applied to the logic engine in the above-mentioned vehicle 110, or the vehicle software execution device 300, or the logic engine in the vehicle 500. The vehicle software execution method can include the following steps S310 to S370.

Step S310, receiving a logic script file transmitted from the cloud device, where the logic script file includes a software identification.

Step S320, executing the logic script file in response to the trigger operation corresponding to the software identification.

Step S330, when executed to trigger the interaction node, transmitting the interaction instruction information to the interaction engine, to enable the interaction engine to execute the interaction node corresponding to the interaction instruction information and generate an interaction event.

For the detailed description of steps S310 to S330 , please refer to the above steps S210 to S230 .

Step S340, listening for the interaction event.

The interaction event in the embodiments of the present disclosure include the software identification, interaction node identification of interaction node, trigger element identification, and interactive behavior event. The interaction node identification is used to indicate the transmitter of the interaction event, that is, to indicate which interaction node the interaction event is transmitted by. The trigger element refers to a constituent element of the interactive structure in the above-mentioned interaction node, such as a text element, or a button element, or an image element. The interactive behavior event is generated based on the user operation performed on the trigger element, for example, the agree button and the disagree button in the above example are trigger elements, and the user clicks the agree button to generate the interactive behavior event "user clicks the agree button".

After transmitting the interaction instruction information, the logic engine listens for the interaction event.

Step S350, when the interaction event is listened, searching the logic script file for the function node corresponding to the interaction event.

In some embodiments, when the interaction event is listened, the interaction event can be parsed to obtain the software identification, the interaction node identification of the interaction node, the trigger element identification, and the interaction behavior event included in the interaction event; based on the software identification, the interaction node identification, the trigger element identification, and the interaction behavior event, the functional node corresponding to the software identification, the interaction node identification, the trigger element identification, and the interaction behavior event is searched in the logic script file.

In detail, the logic script file corresponding to the software identification can be searched, the function node that triggers the interaction node can be searched in the searched logic script file, and the function node corresponding to the trigger element identification and the interaction behavior event can be searched after the function node.

Step S360, executing the function node corresponding to the interaction event in the logic script file.

Step S370, in response to an exit operation corresponding to the software identification, ending the execution of the logic script file.

After the vehicle software is executed, the user or other electronic control unit can execute the exit operation upon the vehicle software. For example, the user clicks an exit button of the vehicle software, or an electronic control unit sets the start flag bit of the vehicle software to a second specific character (e.g., 0), which can be considered as the implementation of the exit operation upon the vehicle software.

In some embodiments, the exit operation on the vehicle software may trigger the transmission of the software identification of the vehicle software corresponding to the exit operation to the logic engine. In response to the exit operation corresponding to the software identification, the logic engine may search for the logic script file corresponding to the software identification in the logic script file being executed, and end the execution of the logic script file.

Compared with the vehicle software execution method shown in FIG. 5, the vehicle software execution method provided by the embodiment of the present disclosure further includes the following technical effects: the interaction event transmitted by the interaction engine can be listened, and the corresponding function node can be executed according to the interaction event, to realize the functions triggered by the user through the interaction operation. In addition, by responding to the trigger operation, starting to execute the logic script file, and responding to the exit operation, ending the execution of the logic script file, the life cycle of the vehicle software (starting to ending execution) can be managed by the logic engine.

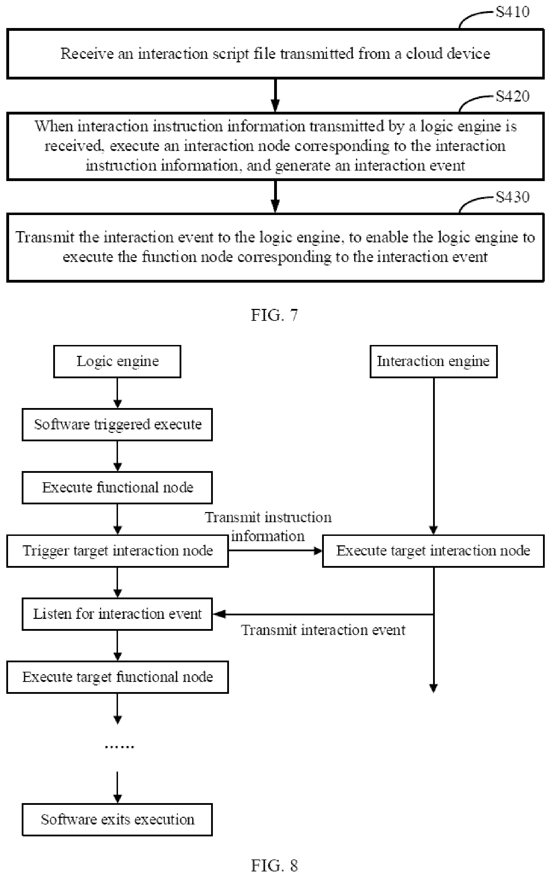

FIG. 7 is a flowchart of a vehicle software execution method. The vehicle software execution method can be applied to the interaction engine in the above-mentioned vehicle 110, or the vehicle software execution device 400 mentioned below, or the interaction engine in the vehicle 500. The vehicle software execution method can include the following steps S410 to S430.

Step S410, receiving the interaction script file transmitted from the cloud device.

As mentioned above, after the cloud device separates the interaction script file from the script file of the vehicle software, it can transmit the interaction script file to the vehicle end, in detail, it can transmit the interaction script file to the interaction engine of the vehicle end. The interaction engine can receive the interaction script file transmitted by the cloud device.

Step S420, when the interaction instruction information transmitted by the logic engine is received, executing the interaction node corresponding to the interaction instruction information, and generating an interaction event.

In some embodiments, when interaction instruction information transmitted by the logic engine is received, the interaction instruction information can be parsed to obtain the software identification, the interaction node identification, and interaction content parameters (i.e., information that is required to be displayed on the interaction interface, such as the above-mentioned interaction structure, interaction style, interaction state, and interaction animation); in the interaction script file, the interaction node corresponding to the software identification and the interaction node identification is searched; and the interaction node is executed according to the interaction content parameters.

In detail, the interaction script file corresponding to the software identification may be searched, and the interaction node corresponding to the interaction node identification may be searched in the interaction script file. The interaction node corresponding to the interaction instruction information may be executed, and an interaction interface corresponding to the interaction node may be displayed according to the interactive content parameters, where the interaction interface includes a trigger element (e.g., a button, or a picture, or a text); in response to a user operation performed on the trigger element, an interactive behavior event corresponding to the user operation is generated.

Step S430, transmitting the interaction event to the logic engine, to enable the logic engine to execute the function node corresponding to the interaction event.

The vehicle software execution method provided in the embodiment of the present disclosure can execute the interaction node corresponding to the interaction instruction information in the interaction script file transmitted by the cloud device, generate the interaction event, and transmit the interaction event to the logic engine, so that the logic engine can execute the function node corresponding to the interaction event, so as to realize the function triggered by the user through the interaction operation. By designing a special interaction engine to execute the interaction script file of the vehicle software, the interaction engine can uniformly manage and execute the interaction script file of the vehicle software, which can avoid the problem of interaction conflicts that are easy to occur when the interaction script files of different vehicle software are executed.

FIG. 8 illustrates a schematic view of an embodiment of a sequential flow of the vehicle software execution method. The vehicle software execution method can be applied to the above-mentioned vehicle 110 or the vehicle 500 mentioned below. In detail, the vehicle software execution method can include the following steps 1 to 8.

Step 1, in response to a trigger operation, starting the logic engine. The trigger operation triggers the transmission of the software identification of the vehicle software corresponding to the trigger operation to the logic engine.

Step 2, the logic engine searching for the logic script file corresponding to the software identification of the vehicle software, and executing the function node in the logic script file.

Step 3, when executed to trigger the target interaction node, the logic engine transmitting instruction information to the interaction engine. The instruction information includes the software identification of the vehicle software, the interaction node identification of the target interaction node, and the interaction content parameters.

Step 4, the interaction engine searching for the interaction script file corresponding to the software identification of the vehicle software, searching for the target interaction node corresponding to the interaction node identification in the interaction script file, executing the target interaction node according to the interaction content parameters, and generating the interaction event.

Step 5, the interaction engine transmitting the interaction event to the logic engine. The interaction event includes the software identification of the vehicle software, the interaction node identification of the target interaction node, the trigger element identification, and the interaction behavior event.

Step 6, when the logic engine has listened for the interaction event, the logic engine searching for the target function node corresponding to the interaction node identification, trigger element identification, and interaction behavior event of the target interaction node in the logic script file corresponding to the software identification of the vehicle software.

Step 7, the logic engine executes the target function node until the target interaction node is triggered and the execution returns to steps 3 to 7, or until the exit operation is responded to and step 8 is executed. The exit operation triggers the transmission of the software identification of the vehicle software corresponding to the exit operation to the logic engine.

Step 8, the logic engine responding to the exit operation and ending the execution process of the logic script file corresponding to the software identification of the vehicle software.

It should be noted that, for the parts not described in detail in this exemplary embodiment, please refer to the above-mentioned related parts and will not be repeated here.

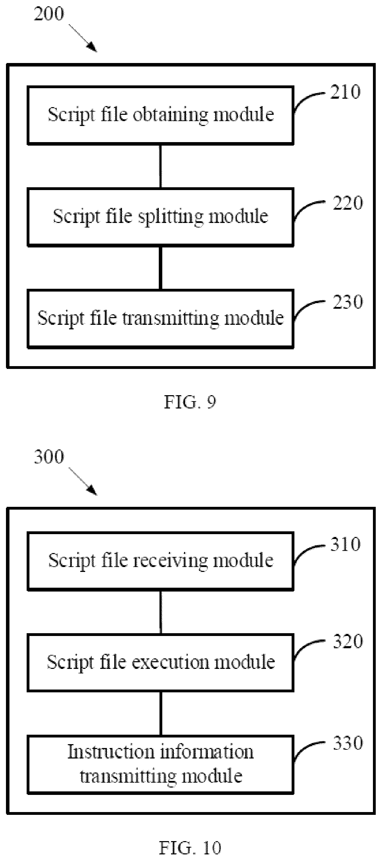

FIG. 9 is a structural schematic view of an embodiment of a vehicle software execution device. The vehicle software execution device 200 can be applied to the above-mentioned cloud device 120. The vehicle software execution device 200 may include a script file obtaining module 210, a script file splitting module 220, and a script file transmitting module 230.

The script file obtaining module 210 is used to obtain a script file corresponding to the vehicle software, where the script file includes a number of nodes of different types.

The script file splitting module 220 is used to split the script file into a logic script file and an interaction script file according to the node types of the nodes in the script file. The logic script file and the interaction script file have the same software identification.

The script file transmitting module 230 is used to transmit the logic script file to the logic engine and the interaction script file to the interaction engine respectively, so that the logic engine executes the logic script file and the interaction engine executes the interaction script file. During the script file execution process, the interaction engine and the logic engine call each other according to the content of the script file.

In some embodiments, the script file splitting module 220 is further used to determine that the node is an interaction node if the node type of the node belongs to the interaction node type, and split the interaction node into an interaction script file, where the interaction node is used to describe content related to human-computer interaction.

In some embodiments, the script file splitting module 220 is further used to determine that the node is a functional node if the node type of the node belongs to the functional node type, and split the functional node into a logical script file, where the functional node is used to describe content related to vehicle control, scene judgment, and vehicle cloud services.

In some embodiments, the script file splitting module 220 is further used to determine that the node is a business logic node if the node type of the node belongs to the business logic node type, and split the business logic node into a logic script file, where the business logic node is used to describe the connection relationship between all nodes.

In some embodiments, the script file splitting module 220 is further used to obtain node labels of nodes in the script file; and determine the node type of the node according to the node label of the node.

FIG. 10 is a structural schematic view of an embodiment of a vehicle software execution device. The vehicle software execution device 300 can be applied to a logic engine in the vehicle 110 or a logic engine in the vehicle 500. The vehicle software execution device 300 may include a script file receiving module 310, a script file execution module 320, and an instruction information transmitting module 330.

The script file receiving module 310 is used to receive a logic script file transmitted from the cloud, where the logic script file includes a software identification.

The script file execution module 320 is used to execute the logic script file in response to a trigger operation corresponding to the software identification.

The instruction information transmitting module 330 is used to transmit interaction instruction information to the interaction engine when executing to the triggered interaction node, so that the interaction engine executes the interaction node corresponding to the interaction instruction information and generates an interaction event.

In some embodiments, the script file execution module 320 is further used to listen for the interaction event; when the interaction event is listened, search for the function node corresponding to the interaction event in the logic script file; and execute the function node corresponding to the interaction event in the logic script file.

In some embodiments, the script file execution module 320 is further used to parse the interaction event to obtain the software identification, the interaction node identification of the interaction node, the trigger element identification, and the interactive behavior event included in the interaction event, where the interactive behavior event is generated according to the user operation performed on the trigger element; based on the software identification, the interaction node identification, the trigger element identification, and the interactive behavior event, search the logic script file for the function node corresponding to the software identification, the interaction node identification, the trigger element identification and the interactive behavior event.

In some embodiments, the script file execution module 320 is further used to end execution of the logic script file in response to an exit operation corresponding to the software identification.

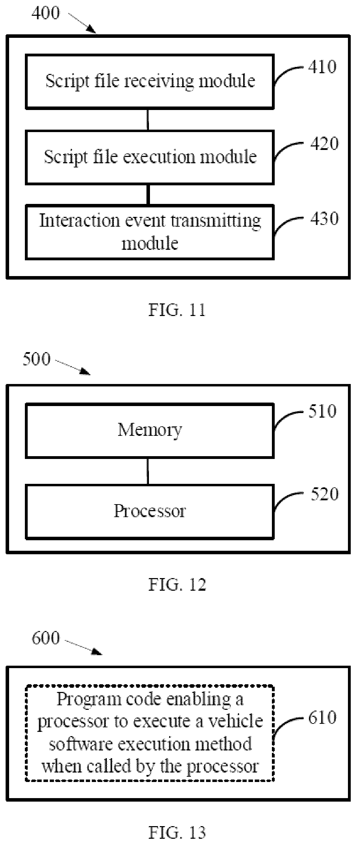

FIG. 11 is a structural schematic view of an embodiment of a vehicle software execution device. The vehicle software execution device 400 can be applied to an interaction engine in the vehicle 110 or an interaction engine in the vehicle 500. The vehicle software execution device 400 may include a script file receiving module 410, a script file execution module 420, and an interaction event transmitting module 430.

The script file receiving module 410 is used to receive the interaction script file transmitted from the cloud.

The script file execution module 420 is used to execute the interaction node corresponding to the interaction instruction information and generate an interaction event when receiving the interaction instruction information transmitted by the logic engine.

The interaction event transmitting module 430 is used to transmit the interaction event to the logic engine so that the logic engine executes the function node corresponding to the interaction event.

In some embodiments, the script file execution module 420 is further used to parse the interaction instruction information to obtain the software identification, the interaction node identification, and the interaction content parameters; in the interaction script file, search for the interaction node corresponding to the software identification and the interaction node identification; and execute the interaction node according to the interaction content parameters.

In some embodiments, the script file execution module 420 is further used to execute an interaction node corresponding to the interaction instruction information, display an interaction interface corresponding to the interaction node, and the interaction interface includes a trigger element; in response to a user operation performed on the trigger element, generate an interactive behavior event corresponding to the user operation.

Those skilled in the art can clearly understand that the vehicle software execution device 200 to the vehicle software execution device 400 provided in the embodiments of the present disclosure can correspondingly implement the vehicle software execution method provided in the embodiments of the present disclosure. The specific working process of the above-mentioned devices and modules can refer to the corresponding process of the vehicle software execution method in the embodiments of the present disclosure, and will not be repeated here.

In the embodiments provided in the present disclosure, the coupling, direct coupling, or communication connection between the modules shown or discussed may be indirect coupling or communication coupling through some interfaces, devices, or modules, and may be electrical, mechanical or other forms, and which is not limited in the embodiments of the present disclosure.

In addition, each functional module in the embodiment of the present disclosure can be integrated into one processing module, or each module can exist physically separately, or two or more modules can be integrated into one module. The above-mentioned integrated modules can be implemented in the form of hardware or in the form of software functional modules, which is not limited in the embodiment of the present disclosure.

FIG. 12 is a structural schematic view of an embodiment of a vehicle according to the present disclosure. The vehicle 500 is the same as the above-mentioned vehicle 110, and also has the above-mentioned logic engine and interaction engine. The vehicle 500 may include one or more of the following components: a memory 510, one or more processors 520, and one or more applications, where the one or more applications may be stored in the memory 510 and configured to, when called by the one or more processors 520, enable the one or more processors 520 to execute the above-mentioned vehicle software execution method provided in the embodiment of the present disclosure.

The processor 520 may include one or more processing cores. The processor 520 uses various interfaces and circuits to connect various parts of the entire vehicle 500, and is used to run or execute instructions, programs, code sets, or instruction sets stored in the memory 510, and run or execute data stored in the memory 510, to perform various functions of the vehicle 500, and process data.

The processor 520 may be implemented in at least one of the following hardware forms: digital signal processing (DSP), field-programmable gate array (FPGA), and programmable logic array (PLA).

The processor 520 may integrate one or a combination of a central processing unit (CPU), a graphics processing unit (GPU), and a modem. The CPU mainly processes the operating system, user interface, and applications; the GPU is used to render and draw display content; and the modem is used to process wireless communication. It is understandable that the above-mentioned modem may not be integrated into the processor 520, but may be implemented separately through a communication chip.

The memory 510 may include a random access memory (RAM) or a read-only memory (ROM). The memory 510 may be used to store instructions, programs, codes, code sets, or instruction sets. The memory 510 may include a program storage area and a data storage area. The program storage area may store instructions for implementing an operating system, instructions for implementing at least one function, instructions for implementing the above-mentioned various method embodiments, etc. The data storage area may store data created by the vehicle 500 during use, etc.

FIG. 13 is a structural schematic view of an embodiment of a computer-readable storage medium according to the present disclosure. The computer-readable storage medium 600 stores program codes 610, which is configured to, when called by the processor, enable the processor to execute the above-mentioned vehicle software execution method provided in the embodiment of the present disclosure.

The computer-readable storage medium 600 may be an electronic storage such as a flash memory, an electrically erasable programmable read-only memory (EEPROM), an erasable programmable read-only memory (EPROM), a hard disk, or a ROM. In some embodiments, the computer-readable storage medium 600 includes a non-transitory computer-readable storage medium (Non-TCRSM).

The computer-readable storage medium 600 has storage space for program codes 610 for executing any method step of the above method. The program codes 610 can be read from or written into one or more computer program software. The program codes 610 can be compressed in an appropriate form.

In summary, the embodiments of the present disclosure provide a vehicle software execution method, device, a vehicle, and a storage medium, which relate to the field of vehicle software technology. The method obtains the script file corresponding to the vehicle software including multiple nodes of different types; according to the node type, the script file is split into a logic script file and an interaction script file; the logic script file is transmitted to the logic engine, and the interaction script file is transmitted to the interaction engine, so that the logic engine executes the logic script file and the interaction engine executes the interaction script file, during the execution of the script file, the interaction engine and the logic engine call each other according to the content of the script file, which can improve the system operation efficiency, system robustness, and business coverage of the script file, support a large number of complex software businesses, avoid the problem of interactive conflicts that are easy to occur when the interaction script files of different vehicle software are executed, and have good flexibility and adaptability for vehicle software development, change, and iteration.

Finally, it should be noted that the above embodiments are only used to illustrate the technical solutions of the present disclosure, rather than to limit them. Although the present disclosure has been described in detail with reference to the above embodiments, those skilled in the art should understand that they can still modify the technical solutions described in the above embodiments, or replace some of the technical features therein by equivalents; and these modifications or replacements do not drive the essence of the corresponding technical solutions out of the spirit and scope of the technical solutions of the embodiments of the present disclosure.

## Claims

1. A vehicle software execution method, **characterized in that**, the vehicle software execution method comprises:
obtaining a script file corresponding to vehicle software, the script file comprising a plurality of nodes of different types;
splitting the script file into a logic script file and an interaction script file according to a node type of each node in the script file; and
transmitting the logic script file to a logic engine and transmitting the interaction script file to an interaction engine respectively, enabling the logic engine to execute the logic script file, and enabling the interaction engine to execute the interaction script file, wherein during a script file execution process, the interaction engine and the logic engine call each other according to content of the script file.

2. The vehicle software execution method according to claim 1, **characterized in that**, splitting the script file into a logic script file and an interaction script file according to a node type of each node in the script file comprises:
if a node type of a node belongs to an interaction node type, determining the node to be an interaction node, and splitting the interaction node into the interaction script file, wherein the interaction node is used to describe content related to human-computer interaction;
if the node type of the node belongs to a functional node type, determining the node to be a functional node, and splitting the functional node into the logic script file, wherein the functional node is used to describe content related to vehicle control, scene judgment, and vehicle cloud services;
if the node type of the node belongs to a business logic node type, determining the node to be a business logic node, and splitting the business logic node into the logic script file, wherein the business logic node is used to describe connection relationships of all nodes.

3. The vehicle software execution method according to claim 1 or 2, **characterized in that**, before splitting the script file into the logic script file and the interaction script file according to the node type of each node in the script file, the vehicle software execution method further comprises:
obtaining a node tag of each node in the script file; and
determining the node type of each node according to the node tag of the node.

4. The vehicle software execution method according to claim 1, **characterized in that**, the logic script file and the interaction script file have a same software identification.

5. A vehicle software execution method, **characterized in that**, the vehicle software execution method comprises:
receiving a logic script file according to any one of claims 1 to 4, wherein the logic script file comprises a software identification;
executing the logic script file in response to a trigger operation corresponding to the software identification; and
when executed to trigger an interaction node, transmitting interaction instruction information to an interaction engine, enabling the interaction engine to execute the interaction node corresponding to the interaction instruction information and generate an interaction event.

6. The vehicle software execution method according to claim 5, **characterized in that**, after transmitting the interaction instruction information to the interaction engine, the vehicle software execution method further comprises:
listening for the interaction event;
when the interaction event is listened, searching for a function node corresponding to the interaction event in the logic script file; and
executing the function node corresponding to the interaction event in the logic script file.

7. The vehicle software execution method according to claim 6, **characterized in that**, searching for the function node corresponding to the interaction event in the logic script file comprises:
parsing the interaction event to obtain the software identification, a interaction node identification of the interaction node, a trigger element identification, and an interactive behavior event comprised in the interaction event, wherein the interactive behavior event is generated according to a user operation performed on a trigger element;
searching the logic script file for the function node corresponding to the software identification, the interaction node identification, the trigger element identification, and the interactive behavior event based on the software identification, the interaction node identification, the trigger element identification, and the interactive behavior event.

8. The vehicle software execution method according to any one of claims 5 to 7, **characterized in that**, the vehicle software execution method further comprises:
ending execution of the logic script file in response to an exit operation corresponding to the software identification.

9. A vehicle software execution method, **characterized in that**, the vehicle software execution method comprises:
receiving an interaction script file according to any one of claims 1 to 4;
when receiving interaction instruction information transmitted by a logic engine, executing an interaction node corresponding to the interaction instruction information, and generating an interaction event; and
transmitting the interaction event to the logic engine, to enable the logic engine to execute a function node corresponding to the interaction event.

10. The vehicle software execution method according to claim 9, **characterized in that**, the instruction information comprises a software identification, an interaction node identification, and interactive content parameters, executing the interaction node corresponding to the interaction instruction information comprises:
parsing the interaction instruction information to obtain the software identification, the interaction node identification, and the interactive content parameters;
searching the interaction node corresponding to the software identification and the interaction node identification in the interaction script file; and
executing the interaction node according to the interactive content parameters.

11. The vehicle software execution method according to claim 9 or 10, **characterized in that**, executing the interaction node corresponding to the interaction instruction information, and generating the interaction event further comprises:
executing the interaction node corresponding to the interaction instruction information, displaying an interaction interface corresponding to the interaction node, wherein the interaction interface comprises at least one trigger element; and
generating an interactive behavior event corresponding to a user operation in response to the user operation performed on the at least one trigger element.

12. A vehicle software execution device, **characterized in that**, vehicle software execution device comprises:
a script file obtaining module, used to obtain a script file corresponding to vehicle software, wherein the script file comprises a plurality of nodes of different types;
a script file splitting module, used to split the script file into a logic script file and an interaction script file according to a node type of each node in the script file; and
a script file transmitting module, used to transmit the logic script file to a logic engine and the interaction script file to an interaction engine respectively, enable the logic engine to execute the logic script file, and enable the interaction engine to executes the interaction script file, wherein during a script file execution process, the interaction engine and the logic engine call each other according to content of the script file.

13. A vehicle software execution device, **characterized in that**, the vehicle software execution device comprises:
a script file receiving module, used to receive a logic script file according to any one of claims 1 to 4, wherein the logic script file comprises a software identification;
a script file execution module, used to execute the logic script file in response to a trigger operation corresponding to the software identification; and
an instruction information transmitting module, used to transmit interaction instruction information to an interaction engine when executed to the trigger an interaction node, enable the interaction engine to execute the interaction node corresponding to the interaction instruction information and generate an interaction event.

14. A vehicle software execution device, **characterized in that**, the vehicle software execution device comprises:
a script file receiving module, used to receive an interaction script file according to any one of claims 1 to 4;
a script file execution module, used to execute an interaction node corresponding to interaction instruction information and generate an interaction event when receiving the interaction instruction information transmitted by a logic engine; and
an interaction event transmitting module, used to transmit the interaction event to the logic engine, to enable the logic engine to execute a functional node corresponding to the interaction event.

15. A vehicle, **characterized in that**, the vehicle comprises:
a memory;
one or more processors; and
one or more applications stored in the memory, and the one or more applications are used to enable the one or more processors execute a vehicle software execution method in any one of claims 1 to 11 when called by the one or more processors.

16. A computer-readable storage medium, **characterized in that**, the computer-readable storage medium comprises:
a plurality of program codes used to enable a processor to execute a vehicle software execution method in any one of claims 1 to 11 when called by the processor.
